## Europäisches Patentamt
## European Patent Office
## Office européen des brevets

(19)

(11) Publication number: **0 103 478**
A1

(12) # EUROPEAN PATENT APPLICATION

(21) Application number: **83305310.1**

(51) Int. Cl.³: **B 66 C 11/18**

(22) Date of filing: **12.09.83**

(30) Priority: **13.09.82 US 417499**

(43) Date of publication of application: **21.03.84**
**Bulletin 84/12**

(84) Designated Contracting States: **AT BE CH DE FR GB IT LI LU NL SE**

(71) Applicant: **Gilchrist, Ian James, 3030 Rustic Manor Circle, Reno Nevada 89509 (US)**
Applicant: **Tracy, Richard Ripley, 10300 Fort Churchill, Reno Nevada 89506 (US)**

(72) Inventor: **Gilchrist, Ian James, 3030 Rustic Manor Circle, Reno Nevada 89509 (US)**
Inventor: **Tracy, Richard Ripley, 10300 Fort Churchill, Reno Nevada 89506 (US)**

(74) Representative: **Blanco White, Henry Nicholas et al, ABEL & IMRAY Northumberland House 303-306 High Holborn, London WC1V 7LH (GB)**

(54) **Airfoil.**

(57) An airfoil 10 to operate at Mach numbers between approximately .2 and 1.0 is designed to achieve high lift capability at low speed and also to minimize drag at high forward speeds. The leading edge region 30 of the airfoil has a relatively large radius of curvature 20 with a slightly drooped configuration to provide high lift at a low Mach number. The curvature of the upper surface 40 aft of the leading edge region and throughout the middle section of the airfoil 10 is relatively low to delay the onset of shock wave drag at moderate lift coefficients at transonic Mach numbers. The lower surface 50 of the airfoil 10 is shaped to provide a nearly uniform load distribution along the chord throughout the middle section at moderate lift coefficients to delay drag increases at transonic Mach numbers.

-1-

S P E C I F I C A T I O N

AIRFOIL

BACKGROUND OF THE INVENTION

This invention relates to airfoils and more particularly to those airfoils useful in highly loaded propellers used in high performance airplane applications.

Highly loaded propellers were used and developed in the 1950's for large transport airplanes and they can be characterized as having high activity factor, very thin, low camber, metal blades. Similar propellers were never developed for general aviation applications, however, because of the lower level of performance required of reciprocating and turboprop engine light planes. Typical general aviation propeller blades thus have low activity factor, relatively thick, highly cambered blades with usually no severe diameter restriction.

The advent of the jet engine caused development of the propeller to virtually stand still for many years. Recently, however, the trend toward high performance propeller powered airplanes has resumed due to the inherently better fuel efficiency of such propulsion systems. A need has, therefore, grown for improved propellers capable of efficiently producing thrust over a wide range of speeds and altitudes. The power loading of these propellers is generally high because diameter is often restricted as in the case of "pusher" installations, wherein the diameter is restricted to avoid contact with the ground. The airfoil and the propeller described herein were designed for such a high performance, pusher airplane application.

Substantial improvements have occurred in recent years in the high speed and high lift performance of two-dimensional airfoils. At the same time there have been considerable advances in computational methods for the design and analysis of airfoil section shapes. The latter development has increased the general knowledge of two-dimensional flows and made possible the relatively inexpensive study of a wide range of shapes without the need for extensive wind tunnel testing.

Propeller manufacturers presently appear to use either NACA-16 series or Clark-Y airfoils almost exclusively in the outboard blade region where most of the thrust of the propeller is developed. Both types offer simplicity of construction and excellent performance in the appropriate application.

For example, a typical general aviation 3-blade turboprop propeller uses an NACA-16 series thickness distribution with a design lift coefficient (CLI) = 0.5. The main characteristics of this airfoil are the following. First, the maximum thickness is located relatively far aft at $X/C = 0.5$. This thickness distribution when added to the A = 1.0 mean line results in an almost "circular arc" upper surface and a uniform chordwise load distribution. Upper surface super velocities are minimized which contributes to high critical Mach numbers. The airfoil further has a small leading edge radius, which in this particular case has good high speed properties, but at the expense of reduced maximum lift at low Mach numbers. A large trailing edge closure angle results in a thick aft region with associated structural benefits, such as increased strength and stiffness in an otherwise fragile area.

The Clark-Y airfoil is generally applied on propellers for low speed airplanes. The main characteristics of this airfoil are that the maximum thickness and camber are located at about $X/C = 0.3$. This configuration results in relatively low critical Mach numbers. The leading edge region of the Clark-Y airfoil, with its large radius of curvature and camber, is shaped to give high maximum lift at low Mach numbers.

These two airfoil shapes represent opposite ends of the performance spectrum of an airfoil. One, the Clark-Y airfoil, is optimized for maximum lift at low speed and the other, the NACA-16 series airfoil, is optimized for high critical Mach number at low and moderate lifts. Because of the restrictions which apply to propeller sections, such as low Reynolds number, low pitching moments, and simple curvature distributions, significant improvements in "design" performance are not easily achieved. Emphasis must therefore be placed on improving "off-design" performance, particularly with regard to the maximum lift versus Mach number boundaries of the high-speed section.

There are two primary objectives in the design and selection of airfoils in general and propeller airfoil sections in particular: (1) obtain high lift at low and moderate forward speeds, and (2) to minimize drag at high forward speeds.

-4-

These objectives in airfoil design impose conflicting requirements on the shape of the airfoil. High lift is generally obtained by airfoil sections having a well-rounded and cambered leading edge such as the Clark-Y shape. Drag rise at high speed is delayed when the maximum thickness is located near mid-chord, this feature being exhibited by the NACA-16 series airfoil. However, at large angles of attack, the air flow separates from the upper surface of the NACA-16 series type airfoil after passing around the sharp leading edge. Thus, high lift generally is not realized using this configuration. The curved upper surface of the Clark-Y type airfoil on the other hand produces an early onset of supersonic flow and shock wave drag at high speeds.

Moreover, in pusher propeller applications it is necessary to design an airfoil which will absorb large power inputs. Additional consideration must be given to the location of the propeller which results in the propeller having to operate in a disturbed flow field caused by the wings and engines. In addition, because of the restricted diameter of the propeller in a pusher propeller application, the airfoil must produce higher thrust levels than conventional propellers with equal diameter.

## SUMMARY OF THE INVENTION

The airfoil of the present invention enables efficient propeller operation to be achieved over a wide range of flight conditions. The radius of the leading edge of the airfoil is relatively large and the nose is drooped to provide improved lift characteristics. The curvature of the upper surface aft of the leading edge is low which delays the onset of the shock wave drag as forward speed of the airfoil increases. The maximum thickness of the airfoil is located well aft, near mid-chord, which also delays the onset of shock wave drag. The lower surface is shaped to provide near uniform load distribution along the chord section. Use of the above configuration results in high values of lift-to-drag ratio over a wider range of Mach numbers than conventional airfoils.

The design of the airfoil disclosed herein is accomplished by varying the geometry until the incompressible flow pressure distribution exhibits a broad peak suction on the upper surface near the nose extending over approximately 10% of the chord of the airfoil. Further, there is a peak suction on the lower surface of the airfoil near the nose extending over a similar chord length. On the upper surface downstream of the broad peak suction, the pressure distribution is relatively flat. At a point between 40 and 80% of the chord, the pressure increases to reach a value near ambient at the trailing edge of the airfoil. The above configuration further produces on the lower surface downstream of the peak suction a pressure distribution which is shaped to give near uniform loading along the chord of the airfoil.

In the present airfoil, the large nose radius and leading edge droop serve to produce the suction peak described hereinabove. The suction peak on the upper surface of the airfoil helps to delay the appearance of strong shock waves. The suction peak on the lower surface of the airfoil is a result of the droop of the nose section and is controlled to be not so large as to produce shock waves or boundary layer separation at the design operating condition. The suction peak is present on the lower surface only to permit the formation of the thick, drooped leading edge, which in turn yields high lift at low and moderate speeds. Further, the low curvature of the upper surface and the relatively aft location of the maximum thickness, near mid-chord delay the onset of shock wave formation and consequent drag rise to relatively higher Mach numbers. Further, an additional feature of the present airfoil is the use of aft camber to maintain near uniform loading back to the trailing edge of the airfoil. Loading of the airfoil in this manner contributes to the delay of the drag rise onset until higher Mach numbers.

The airfoil disclosed herein is particularly suited to application in propellers having high disc loading and high tip Mach numbers. Such propellers usually have wide chord blades (high activity factor) and incorporate airfoils with moderate design lift coefficients (moderate camber). Further the improved performance of the airfoil enables the design of a propeller blade which has a higher thickness-to-chord ratio than a conventional blade. The blade can therefore be stronger structurally than a conventional blade with similar performance. This makes the airfoil particularly suited to applications where high static and dynamic loads are encountered. Another advantage due to the reduced shock wave strengths at high Mach numbers is a reduction in noise level perceived both inside and outside the airplane.

It is a primary object of the present airfoil to produce higher thrust levels than conventional propellers with equal diameter.

It is a further object of the present airfoil to absorb large power inputs, particularly during take-off and climb-out.

It is a further object of the present airfoil to operate efficiently at high altitudes with high power loading.

It is a further object of the present airfoil to produce high efficiencies with tip helical Mach numbers greater than 0.9.

It is a further object of the present invention to permit increased blade thickness for operation in non-uniform flow fields which produce increased dynamic loads.

It is a further object of the present invention to minimize interior and exterior noise at high power loadings.


DESCRIPTION OF THE DRAWINGS


Figure 1 is a side view of the untwisted propeller blade disclosed herein.

Figure 2 is edge view of the untwisted propeller blade disclosed herein.

Figure 3 is a cross-section view at r/R = .2 of the propeller blade disclosed herein.

Figure 4 is a cross-section view at r/R = .33 of the propeller blade disclosed herein.

Figure 5 is a cross-section view at r/R = .46 of the propeller blade disclosed herein.

Figure 6 is a cross-section view at r/R = .6 of the propeller blade disclosed herein.

Figure 7 is a cross-section view at r/R = .73 of the propeller blade disclosed herein.

Figure 8 is a cross-section view at r/R = .86 of the propeller blade disclosed herein.

Figure 9 is a cross-section view at r/R = .93 of the propeller blade disclosed herein.

Figure 10 is a cross-section view at r/R = 1.0 of the propeller blade disclosed herein.

Figure 11 is a pressure distribution at r/R = .2 of the propeller blade disclosed herein.

Figure 12 is a pressure distribution at r/R = .33 of the propeller blade disclosed herein.

Figure 13 is a pressure distribution at r/R = .46 of the propeller blade disclosed herein.

Figure 14 is a pressure distribution at r/R = .6 of the propeller blade disclosed herein.

Figure 15 is a pressure distribution at r/R = .73 of the propeller blade disclosed herein.

Figure 16 is a pressure distribution at r/R = .86 of the propeller blade disclosed herein.

Figure 17 is a pressure distribution at r/R = .93 of the propeller blade disclosed herein.

Figure 18 is a pressure distribution at r/R = 1.0 of the propeller blade disclosed herein.

### DESCRIPTION OF THE PREFERRED EMBODIMENT

While airfoils of the type discussed herein have application to propellers in generaly, they are particularly suitable for use as a pusher propeller, wherein a single propeller is driven by two engines and is mounted at the rear of the airplane.

In all cases, the efficiency of a propeller airfoil is measured by the airfoil's ability to convert engine power into thrust. One of the parameters affecting the efficiency of a propeller is the life-to-drag ratio (L/D) of the forces developed by the airfoil. The higher the value of L/D, other factors being equal, the higher will be the efficiency of the propeller. Under take-off or climb conditions of airplane operation it is desirable to maximize lift without incurring high values of drag. Lower values of lift are usually required in straight and level or cruising flight so that the emphasis is placed on minimizing drag.

It is also well known that resultant air velocity experienced by propeller airfoils increases from hub to tip. The air is accellerated as it passes around the airfoil and its veloc: can exceed that of the speed of sound, particularly on the upper (suction) surface near the blade tip. Shock waves appearing in the flow when the supersonic region is extensive cause the drag force D to be higher than for wholly subsonic flow. Thus, there are two distinct areas of concern in the design and selection of propeller airfoil sections: (1) To obtain high lift at low and moderate forward speeds and (2) to minimize drag caused by shock wave formation at high forward speeds.

In the design of airfoils for use as propellers it is also necessary to take into consideration the long range cruise efficiency at a certain airplane speed, the take-off thrust of the airfoil, and the high speed cruise efficiency.

In all cases it is necessary that minimum weight be a design objective. Further, the reliability and durability of the propeller blade must be taken into consideration. As in all aircraft there must be no possibility of structural failure with normal use and inspection. In addition, the blade must be designed to account for various environmental effects, such as moisture, solar exposure, temperature extremes and lightning strike.

In addition, a pusher propeller, which is the particular application for which the subject airfoil is designed, must be able to operate in a disturbed flow field caused by the wings, tail and engine exhaust. These factors can cause high, steady and dynamic blade and hub loads which must be accounted for in meeting the durability and reliability requirements.

The new airfoil shapes as disclosed herein have been designed for use with pusher propellers and the potential for substantial improvement over current blades has been established. The methods of incorporating the airfoil cross sections into the blade are well known to those skilled in the art. The first step in the design of a propeller blade is to optimize its overall shape and loading for the required operating conditions. Blade numbers, diameter, chord, thickness, thrust and camber are variables which affect the overall efficiency of the propeller. Calculation procedures are available in the literature which provide the power, thrust and efficiency characteristics of a propeller as functions of the above parameters for take-off, climb and cruise flight. From these calculations are obtained the power and thrust loadings along the blade which in turn yield the design lift, drag and Mach number requirements for the individual airfoil sections.

The airfoils of the present invention offer improved overall performance relative to conventional shapes when incorporated into a blade design. For a given maximum lift, higher drag divergence Mach numbers are obtained than for an NACA-16 or Clark-Y airfoil. In terms of propeller performance this translates to higher cruise efficiency for the same take-off thrust. Alternatively, for a given drag divergence Mach numbers, higher maximum lifts are obtained than with an NACA-16 or Clark-Y airfoil. This translates to higher take-off thrust for the same cruise efficiency.

It is also possible to take advantage of both the high Mach number and high lift characteristics in such a way as to obtain improved overall performance. This is the approach that was taken with the embodiment described herein.

-12-

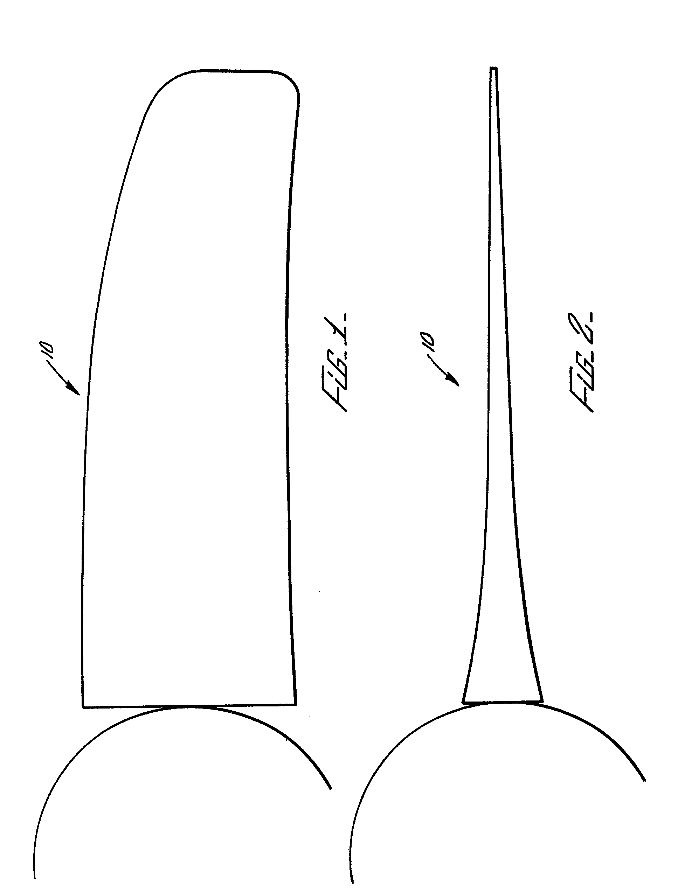

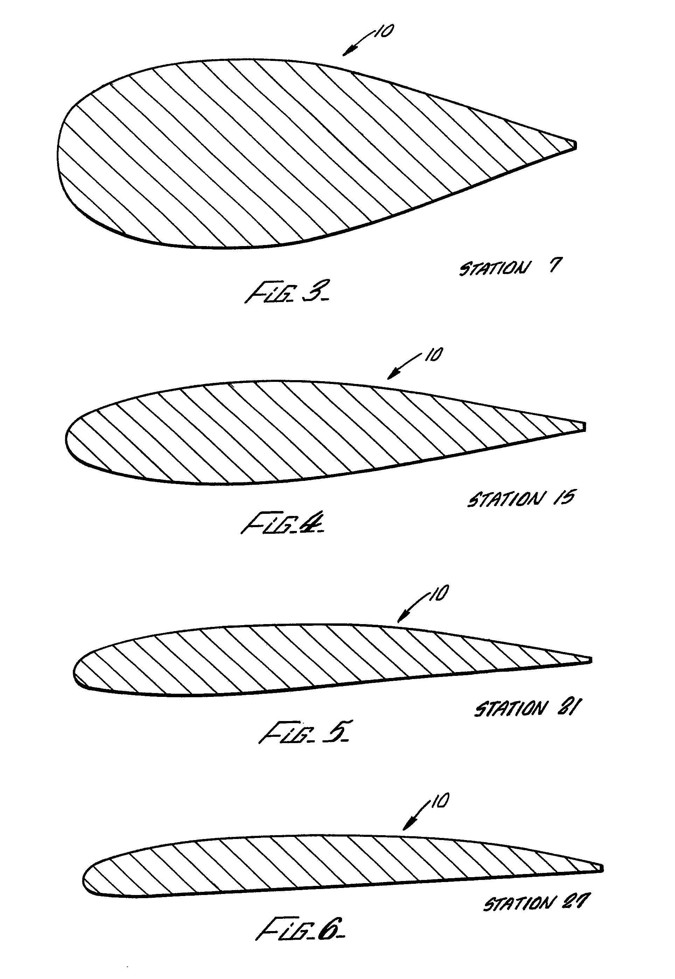

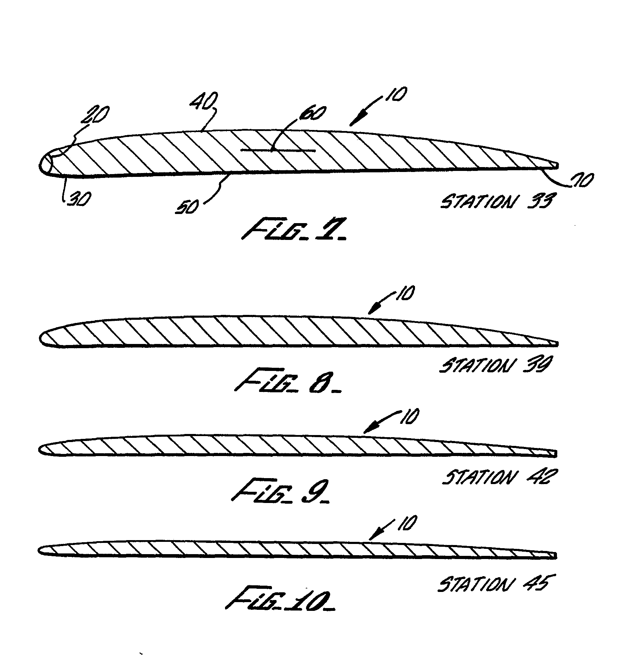

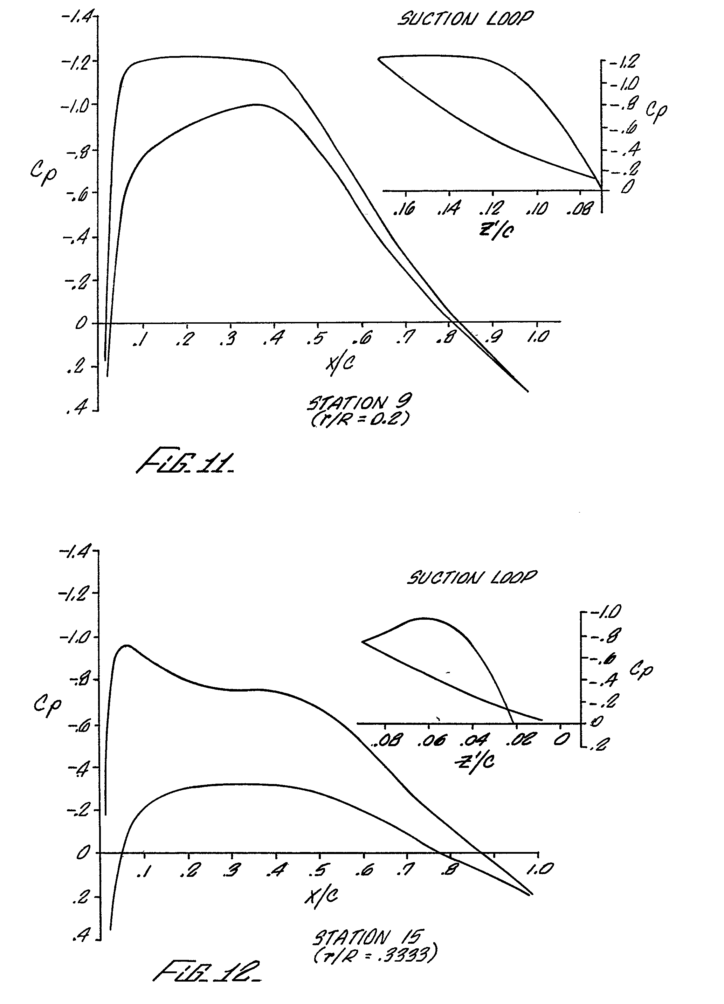

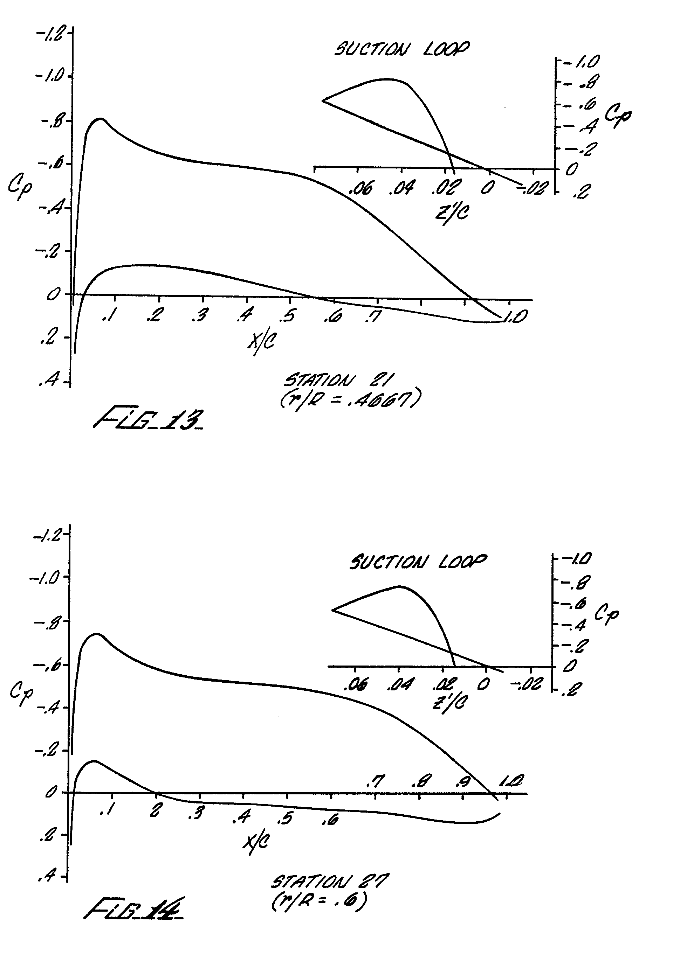

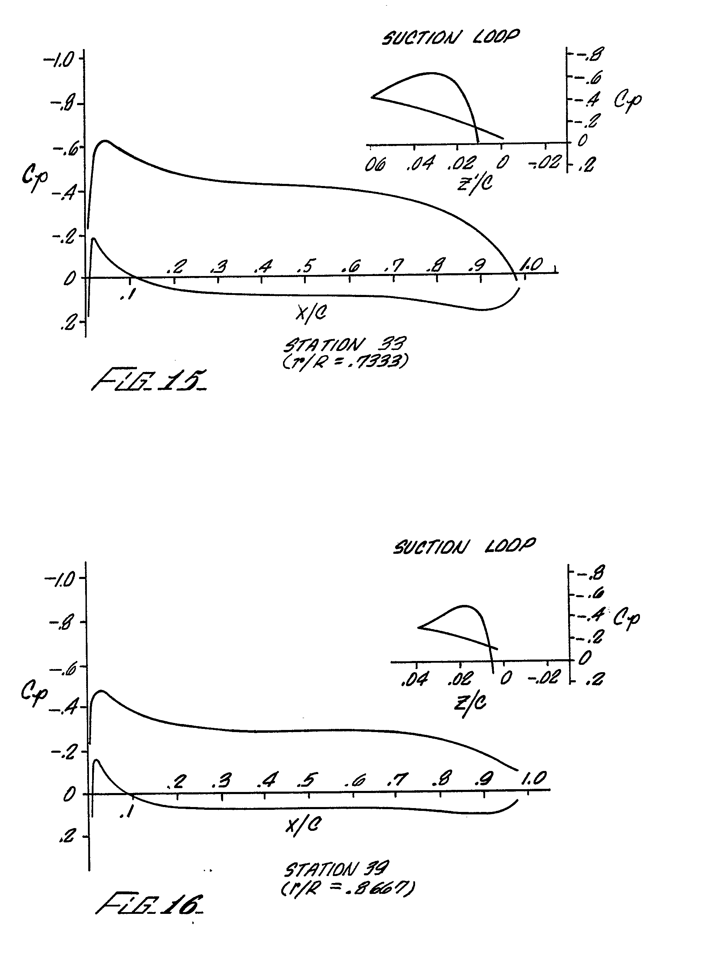

The type of airfoil that is disclosed, more particularly called a "high lift airfoil", is embodied in the propeller design shown in Figures 1 to 10.

Figures 1 and 2 illustrate the planform and thickness of the propeller blade which was optimized for a high performance, pusher airplane. Figures 3 to 10 show representative airfoil cross sections taken at various distances along the blade, denoted Stations 7, 15, 21, 27, 33, 39, 42 and 45.

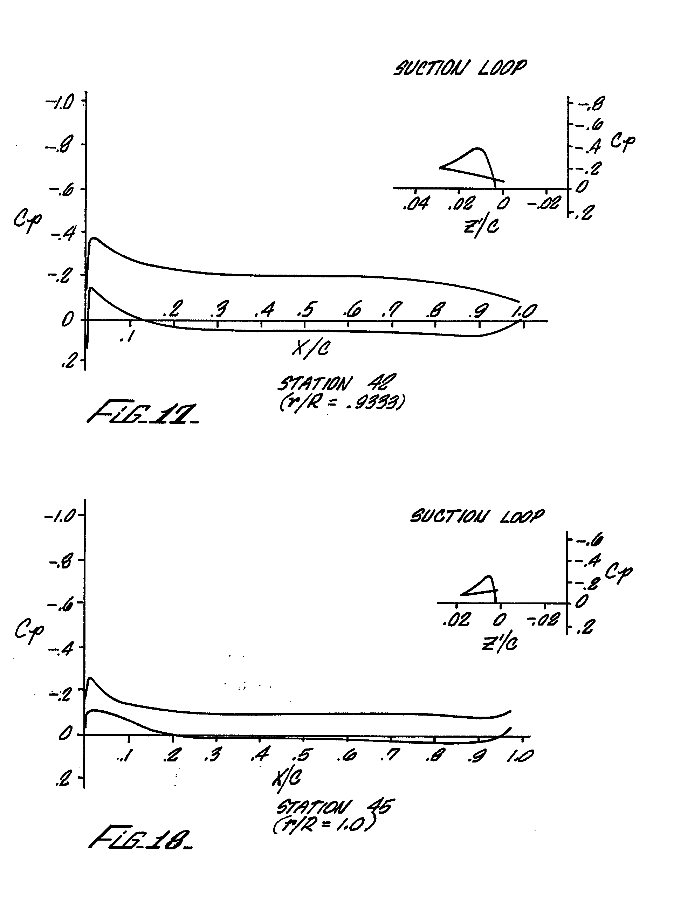

The section at Station 33 in Figure 7 (r/R = .73) is a typical high lift airfoil 10. In the subject pusher propeller, Section 33 is where the blade is most highly loaded and where most of the work of the airfoil is done. The leading edge radius 20 of the high lift airfoil 10 is large and the nose 30, back to about 20% of the chord, is slightly drooped. These features provide good high lift characteristics as discussed previously. The curvature of the upper surface 40 aft of the nose 30 is low which delays the onset of shock waves and drag at high speeds. The lower surface 50 is shaped to provide a near uniform load distribution along the chord 60. The trailing edge 70 is cambered to develop aft loading which also contributes to high critical Mach numbers.

Representative airfoil shape along the propeller blade is more particularly set forth herein as follows:

0103478

## TABLE 1
## PROPELLER BLADE GEOMETRY

| Radius (ins) | r/R | Thickness (ins) | Chord (ins) | t/c | Twist Angle (deg) | $C_{L_D}$ | $M_D$ |
|---|---|---|---|---|---|---|---|
| 9 | .2 | 4.36 | 12. | .363 | 60.5 | .2 | .607 |
| 15 | .3333 | 2.28 | 11.76 | .194 | 52.0 | .4 | .694 |
| 21 | .4667 | 1.51 | 11.49 | .131 | 43.3 | .55 | .727 |
| 27 | .6 | 1.10 | 11.125 | .099 | 35.3 | .645 | .745 |
| 33 | .7333 | .785 | 10.5 | .075 | 28.6 | .645 | .773 |
| 39 | .8667 | .47 | 9.42 | .050 | 23.1 | .55 | .822 |
| 42 | .9333 | .312 | 8.3 | .038 | 20.9 | .42 | .859 |
| 45 | 1. | .15 | 6.5 | .023 | 18.8 | .20 | .925 |

The leading edge radius 20 is increased and the nose 30 drooped to the extent that it does not have an adverse effect on the pressure distribution from a high speed point of view. The result is a suction peak as will be described hereinafter on the lower surface 50 near the nose 30. The airfoil 10 is shaped so that, at the design lift coefficient, the peak is not so high as to cause boundary layer separation or an early drag rise from the lower surface 50.

The two most important features, illustrated by the present airfoil, which increase critical Mach number are (1) shaping the upper surface such that the formation of shock waves is delayed; and (2) cambering the trailing edge so that the upper surface velocity level is reduced for a given lift. The design of these features is best explained in Figures 11-18 by referring to a typical pressure distribution. Figure 15 shows the pressure distribution for the airfoil at Station 33 of the preferred embodiment.

The suction loop is part of the pressure distribution plotted against a skewed z/c ordinate. The area contained by the suction loop is equal to the suction force on the forward facing surfaces. There is drag loop (not shown) which is approximately equal in size, which integrates to give the drag force on rearward facing surfaces. The difference in area between the two loops is the pressure drag of the airfoil. At subsonic speeds, it is due to boundary layer build-up and is small. When the critical Mach number is exceeded, the shape of the suction loop changes and ultimately the area collapses. This leads to increasing pressure drag, commonly referred to as wave drag. Studies have shown that drag divergence can be delayed by up to M = .05 by introducing a high peak suction in the incompressible suction loop. The broad peak of the disclosed airfoil 10 gives a delay of about 0.03 beyond the critical Mach number.

The upper surface 40 configuration determines the drag rise characteristics of an airfoil. The lower surface 50 mainly determines its thickness distribution and design lift. The integrated area between the upper and lower surface pressures is the lift coefficient of the airfoil. Simple scaling rules (such as that developed by Prandtl and Glauert) can be used to estimate the effects of increasing Mach number. Consideration of the pressure distribution of the disclosed airfoil shows that, if the airfoil is uniformly or aft loaded, the upper surface pressure level can be minimized for a given lift. Hence the critical Mach number can be maximized. This is the fundamental theory behind so called supercritical airfoils.

In the present airfoil, the shaping of the nose for high lift while maintaining desirable high speed (upper surface) characteristics is also an important feature. The leading edge radius is increased and the nose drooped to the extent that it does not have an adverse effect on the pressure distribution from a high speed point of view. The result is a suction peak on the lower surface near the nose (Figure 15). The airfoil is shaped so that, at the design lift coefficient, the peak is not so high as to cause boundary layer separation or an early drag rise from the lower surface. Drooping the nose in this way retards the rate of growth of peak suction on the upper surface with angle of attack. This in turn increases the angle of attack at which boundary layer separation occurs, hence increasing the maximum lift of the airfoil.

The propeller blade embodying the airfoil of this invention is preferably formed of composite materials, such as Kevlar-Epoxy, because of the light weight and to minimize the rearward center of gravity shift due to the pusher propeller configuration. Kevlar is a trademark for an aramid fibre manufactured by Dupont Chemicals. The lower mechanical properties of Kevlar means that the blade requires a relatively large thickness-to-chord ratio for adequate strength and stiffness. This increased thickness is advantageous from the point of view of airfoil maximum lift, but a drawback to high drag divergence Mach numbers. The root region is particularly thick to provide adequate stiffness and retention. An aerodynamic fairing (cuff) is required to reduce high speed drag from that region. Sweepback was incorporated outboard to partially offset thickness effects and to reduce noise. One advantage of the large thickness-to-chord ratios is the high natural

-16-

frequencies of the blades. This is desirable in the dynamic loading environment provided by the pusher propeller configuration.

The main features of the final blade design can be summarized as follows: (1) Wide chord (high activity factor), (2) novel airfoils having high drag divergence Mach numbers with good low speed, high lift characteristics, (3) Optimized airfoil camber and twist along the length of the blade, (4) Moderately cambered airfoils with minimum thickness to chord ratio permitted by structural considerations, (5) Aerodynamic shank fairing (cuff), (6) Swept blade planform, (7) Composite construction.

The invention has been disclosed in considerable detail herein, but it should be understood that various modifications may be made to the configurations disclosed herein without departing from the scope and spirit of the appended claims.

We claim:

1. An airfoil for a propeller adapted to operate at a Mach number between approximately .2 to near 1.0 and adapted to achieve high lift capability at low speed, comprising upper and lower surfaces defining a leading edge region, a middle section and a trailing edge region, said leading edge region having a relatively large radius of curvature with a slightly drooped configuration to provide high lift at a lower Mach number, the curvature of said upper surface aft of said leading edge region and throughout said middle section being relatively low to delay the onset of shock wave drag at moderate lift coefficients at transonic Mach numbers, said lower surface being substantially flat to provide a substantially uniform load distribution along the chord of said airfoil throught said middle section at moderate lift coefficients, which contributes to delayed drag increases at transonic Mach numbers.

2. The airfoil of claim 1 in which the maximum thickness of the airfoil is located approximately 40 to 50% of the distance from said leading edge region.

3. The airfoil of claim 1 in which said middle section is of substantially uniform thickness.

4. The airfoil of claim 1 in which said trailing edge region has an upper surface with increased convex curvature and a lower surface with local concavity to maintain a substantially uniform load distribution as far aft as possible along said airfoil, to contribute to delayed drag increases at moderate lift coefficients at transonic Mach numbers.

-18-

5. An airfoil adapted to operate at a Mach number between approximately .2 to near 1.0, comprising

an upper surface,

a lower surface,

said upper and lower surfaces joined to define a leading edge region,

a middle section aft of said leading edge region,

a trailing edge region aft of said middle section,

said leading edge region having a relatively larger radius of curvature,

said leading edge region having a slightly drooped configuration,

said upper surface aft of said leading edge region and throughout said middle section being convex and having a relatively low radius of curvature,

said lower surface aft of said leading edge region and throughout said middle section being concave and having a relatively low radius of curvature,

said trailing edge region being cambered.

6. The airfoil of claim 5, wherein the maximum thickness of the airfoil is located at approximately 40 to 50% of the distance from said leading edge region.

7. The airfoil of claim 5 wherein said middle section is of substantilly uniform thickness.

FIG. 1.

FIG. 2.

_10_

_FIG. 3_

STATION 7

_10_

_FIG. 4_

STATION 15

_10_

_FIG. 5_

STATION 21

_10_

_FIG. 6_

STATION 27

FIG. 7.    STATION 33

FIG. 8.    STATION 39

FIG. 9.    STATION 42

FIG. 10.   STATION 45

SUCTION LOOP

STATION 9
(r/R = 0.2)

FIG. 11.

SUCTION LOOP

STATION 15
(r/R = .3333)

FIG. 12.

FIG_13

STATION 21
(r/R = .4667)

FIG_14

STATION 27
(r/R = .6)

SUCTION LOOP

FIG 15

STATION 33
(r/R = .7333)

SUCTION LOOP

FIG 16

STATION 39
(r/R = .8667)

FIG.17.

SUCTION LOOP

STATION 42 (r/R = .9333)

FIG.18.

SUCTION LOOP

STATION 45 (r/R = 1.0)

European Patent Office

**EUROPEAN SEARCH REPORT**

EP  83 30 5310

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,P | GB-A-2 102 505   (UNITED TECHNOLOGIES)<br>* Page  11,  lines 29-50; figurs 3,4 * | 1,3-5, 7 | B 64 C   11/18 |
| A | US-A-2 938 585   (FANTI)<br><br>* Column 1, lines 35-40; figures 1-4 * | 1,4,5, 7 | |
| A | FR-A-2 159 422   (NASA)<br>* Whole document * | 5-7 | |
| A | FR-A-2 384 671   (VEREINIGTE FLUGTECHNISCHE WERKE-FOKKER)<br>* Page  1,  lines  1-40; page 2, lines 1-32; figure 1 * | 5,6 | |

TECHNICAL FIELDS SEARCHED (Int. Cl. ³)

B 64 C

The present search report has been drawn up for all claims

| Place of search<br>THE HAGUE | Date of completion of the search<br>13-12-1983 | Examiner<br>ZERI A. |
|---|---|---|